# EUROPEAN PATENT APPLICATION

(11) **EP 2 015 202 A1**
(43) Date of publication of application: **14.01.2009**
(21) Application number: 08159928.4
(22) Date of filing: 08.07.2008
(51) Int. Cl.: G06F 17/30

(54) **Method and apparatus for generating electronic content guide**

(30) Priority: 10.07.2007 KR 20070069216
(71) Applicant: Samsung Electronics Co., Ltd., Suwon-si, Gyeonggi-do 442-742 (KR)
(72) Inventor: Cho, Sang-wook, Suwon-si Gyeonggi-do (KR); Hwang, Cheol-ju, Yongin-si Gyeonggi-do (KR); Yun, Won-dong, Namyangju-si Gyeonggi-do (KR); Park, Soo-hong, Gwangju-si Gyeonggi-do (KR); Lee, Min-ho, Gwacheon-si Gyeonggi-do (KR); Jang, Jeong-rok, Suwon-si Gyeonggi-do (KR); Choe, Yun-ju, Suwon-si Gyeonggi-do (KR)
(74) Representative: Robinson, Ian Michael

(57) **Abstract**

A method and apparatus that generates an electronic content guide using received metadata associated with content provided from a plurality of servers (110-140) and which has different formats. The received metadata is collected, the formats of the collected metadata are converted into a same format, and an electronic content guide is generated using the metadata having the same format.

## Description

### BACKGROUND OF THE INVENTION

### 1. Field of the Invention

Aspects of the present invention relate to a method and apparatus for generating an electronic content guide.

### 2. Description of the Related Art

User-created Content (UCC) refers to various kinds of media content that are produced by end-users. The term UCC reflects the expansion of media production through new technologies that are accessible and affordable to the general public. Internet protocol television (IPTV) is also widely used. Thus, users of UCC and IPTV can access great amounts of content. Therefore, schemes for users to easily access a large amount of contents are needed.

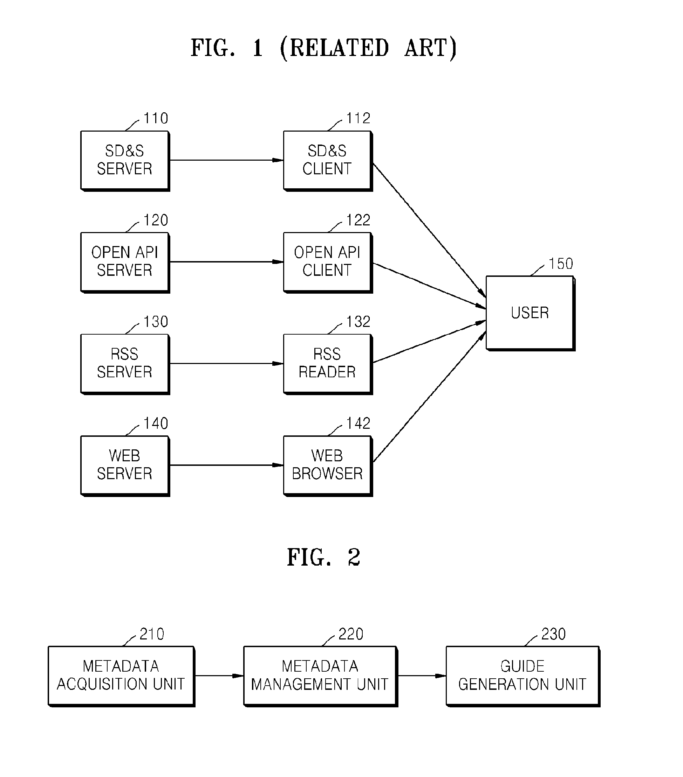

FIG. 1 is a block diagram explaining a conventional content receiving method. Referring to FIG. 1, data having predetermined formats is transmitted from a service discovery & selection (SD&S) server 110, an open application programming interface (API) server 120, a rich site summary (RSS) server 130, and a web server 140 to an SD&S client 112, an open API client 122, an RSS reader 132, and a web browser 142, respectively. Here, the SD&S server 110 is a server for providing an IPTV service.

Here, as each of the servers constructs content and metadata for the content in different formats, only a client corresponding to a server which transmits the content and metadata can read the contents and the metadata. Therefore, a user 150 checks contents transmitted from the servers or information on the contents generated by using metadata, such as summary information, by using the clients such as the SD&S client 112, the open API client 122, the RSS reader 132, and the web browser 142.

As described above, conventionally, in order for the user to check contents transmitted from various types of servers, the user has to check the contents by using a specific client corresponding to the associated server, thus causing inconvenience to the user. In addition, the formats of the metadata for the contents provided from the servers are different from each other, and thus it is difficult to generate an electronic content guide which integrates such information and outputs such information on the content received from a plurality of the servers.

### SUMMARY OF THE INVENTION

According to the present invention there is provided an apparatus and method as set forth in the appended claims. Other features of the invention will be apparent from the dependent claims, and the description which follows.

In one aspect of the present invention, there is provided a method and apparatus for generating an electronic content guide that integrates and outputs metadata on content received from a plurality of servers, even when the metadata has different formats from each other.

According to an aspect of the present invention, there is provided a method of generating an electronic content guide, including: receiving metadata associated with content provided from a plurality of servers, the metadata having different formats from each other; collecting the received metadata and converting formats of the collected metadata into a same format; and generating an electronic content guide by using the metadata converted to have the same format.

According to aspects of the present invention, the receiving of the metadata may include receiving the metadata according to metadata acquisition information, and the metadata acquisition information may include at least one of a keyword for metadata acquisition and a category list for the metadata acquisition.

According to aspects of the present invention, the metadata acquisition information may further include at least one of a service discovery & selection (SD&S) server list, a list of sites supporting an open application program interface (API), a rich site summary (RSS) site list, and a web site list.

According to aspects of the present invention, the metadata acquisition information may be updated by receiving or fetching the metadata acquisition information from a database at predetermined intervals.

According to aspects of the present invention, the method may further include deleting overlapping metadata in the metadata converted to have the same format.

According to aspects of the present invention, the method may further include generating metadata for content which does not have the metadata when content which does not have metadata exists in the contents provided from the servers.

According to another aspect of the present invention, there is provided an apparatus for generating an electronic content guide, including: a metadata acquisition unit to receive metadata associated with contents provided from a plurality of servers, the metadata having different formats from each other; a metadata management unit to collect the received metadata and to convert formats of the collected metadata into a same format; and a guide generation unit to generate an electronic content guide by using the metadata converted to have the same format.

According to aspects of the present invention, the metadata acquisition unit may include at least one of an SD&S client, an open API client, an RSS reader, and a web browser.

According to aspects of the present invention, the apparatus may further include a database to store the metadata acquisition information, wherein the metadata acquisition unit updates the metadata acquisition information by receiving the metadata acquisition information or fetching the metadata acquisition information from the database at predetermined intervals.

According to aspects of the present invention, the apparatus may further comprise a metadata generation unit to determine whether content which does not have metadata exists in the contents provided from the servers and selectively generates metadata for the content on the basis of the result of the determination.

According to another aspect of the present invention, there is provided a computer-readable medium having embodied thereon a computer program for the method of generating an electronic content guide, comprising: receiving metadata associated with content provided from a plurality of servers, the metadata having different formats from each other; collecting the received metadata and converting formats of the collected metadata into the same format; and generating an electronic content guide by using the metadata converted to have the same format.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram illustrating a conventional content receiving method;
FIG. 2 is a block diagram of an apparatus that generates an electronic content guide, according to an embodiment of the present invention; and
FIG. 3 is a flowchart illustrating a method of generating an electronic content guide, according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures. When it is stated that a feature comprises at least one of a first element and a second element, the feature is understood to comprise the first element, the second element, or the first and second elements.

FIG. 2 is a block diagram of an apparatus that generates an electronic content guide, according to an embodiment of the present invention. Referring to FIG. 2, the apparatus that generates an electronic content guide according to the current embodiment of the present invention includes a metadata acquisition unit 210, a metadata management unit 220, and a guide generation unit 230.

The metadata acquisition unit 210 receives metadata, which is associated with content provided from a plurality of servers. The received metadata has different formats from each other. More specifically, the metadata acquisition unit 210 requests metadata for a predetermined content from a plurality of the servers, and receives metadata from each of the plurality of servers as a response to the request.

Here, the metadata acquisition unit 210 includes at least one of a service discovery & selection (SD&S) client, an open application programming interface (API) client, a rich site summary (RSS) reader, and a web browser to receive metadata for content provided from a server corresponding to each of the clients. Unlike in the conventional art, the metadata acquisition unit 210 according to the current embodiment of the present invention receives content and metadata for the content received from various types of servers at one time without distinguishing the types of the content and the metadata from each other, so that a user does not need to search for a client corresponding to an associated server.

The metadata acquisition unit 210 may receive the metadata on the basis of metadata acquisition information. In such case, the metadata acquisition information may include at least one of a keyword for metadata acquisition and a category list for the metadata acquisition. For example, the keyword for the metadata acquisition may be "millennium." In such case, the metadata acquisition unit 210 may receive metadata for contents associated with the keyword from a SD&S server, an open API server, an RSS server, and a web server according to the keyword. In addition, the category list for the metadata acquisition may include a category such as "sport," "music," "politics," "society," or the like, and the metadata acquisition unit 210 may receive metadata for the newest contents included in the categories.

Further, the metadata acquisition information may include an SD&S server list, a list of sites of supporting open APIs, an RSS site list, and a web site list. For example, when the metadata acquisition information includes a portal web site address "www.naver.com" and a category "sport," the metadata acquisition unit 210 may receive metadata on contents which are associated with the "sport" and newly updated in the portal web site "www.naver.com".

The metadata acquisition information may be externally received at predetermined intervals or fetched from a database in order to be updated. Further, such update of the metadata acquisition information may be manual or automatic. For example, the user may input a new keyword for metadata acquisition and store the keyword in a database. In such case, the metadata acquisition unit 210 checks at predetermined intervals whether updated information exists in the database. Since the new keyword is stored in the database, an updating operation of fetching the new keyword from the database and adding the new keyword to the metadata acquisition information is performed. Thereafter, metadata is received on the basis of the updated metadata acquisition information. Also, the user may specifically search for a new keyword or control the metadata acquisition unit 210 to update the metadata acquisition information manually, using keywords from the database or not.

In addition, when metadata acquisition information, which includes an address of a web site of which a service is discontinued or a web site list from which an address of a web site that the user does not access for a long time is deleted, is received, the metadata acquisition unit 210 performs an updating operation to reflect the inactivity or deletion of the addresses for the web sites in the metadata acquisition information and receive metadata on the basis of the updated metadata acquisition information.

The apparatus to generate an electronic content guide according to the current embodiment of the present invention may further include a database (not shown) for storing the metadata acquisition information.

Content provided from servers may not have metadata. When the content does not have metadata, the apparatus to generate an electronic content guide according to the current embodiment of the present invention may perform generate metadata for the content that does not have metadata.

Accordingly, the apparatus that generates an electronic content guide according to the current embodiment of the present invention may further include a metadata generation unit (not shown) to determine whether content that does not have metadata exists in the contents provided from the servers and, on the basis of the result of the determination, generates the metadata for the content which does not have the metadata. The metadata data generation unit may be incorporated in the metadata management unit 220.

The metadata management unit 220 collects metadata received by the metadata acquisition unit 210 (as well as the metadata generation unit, if included) and converts formats of the collected metadata into the same format.

Since the formats of the received metadata are different from each other, in order to generate an electronic content guide, the formats of the collected metadata have to be converted into a same format.

The metadata management unit 220 may delete overlapping metadata from the metadata converted to have the same format. For example, when metadata received from an RSS server is the same as metadata received from a web server, the metadata management unit 220 deletes one of the metadata received from the RSS server and the metadata received from the web server. In such case, the user may set a rule in advance to determine which metadata is to be deleted when the metadata overlaps, and the metadata management unit 220 may delete the overlapping metadata according to the rule. However, the metadata management unit 220 is not limited thereto such that the metadata management unit 220 may randomly or preferentially delete one of the metadata received from the RSS server and the metadata received from the web server. For example, the metadata management unit 220 may preferentially delete the metadata received from the RSS server when the metadata received from the RSS server and the metadata received from the web server overlap. Further, if a database contain the metadata, the metadata contained in the database and the received metadata may be compared; and one of the received metadata and the metadata in the database may be deleted if the received metadata overlaps the metadata contained in the database.

The guide generation unit 230 generates an electronic content guide by using the metadata converted to have the same format received from the metadata management unit 220.

As described above, when the electronic content guide is generated by the guide generation unit 230, the generated electronic content guide may be output on a screen, and the user can check information on the content provided from various types of servers through the output electronic content guide. Accordingly, the apparatus that generates an electronic content guide according to the current embodiment of the present invention may further include a graphical user interface(not shown) to display the generated electronic content .According to the current embodiment of the present invention, without using a client corresponding to each of a plurality of servers, information on content provided from a plurality of servers can be checked by checking the electronic content guide generated by the guide generation unit 230. Therefore, user convenience significantly increases in comparison to the conventional art. Here, the electronic content guide may be displayed through a graphic user interface (GUI) but is not limited thereto.

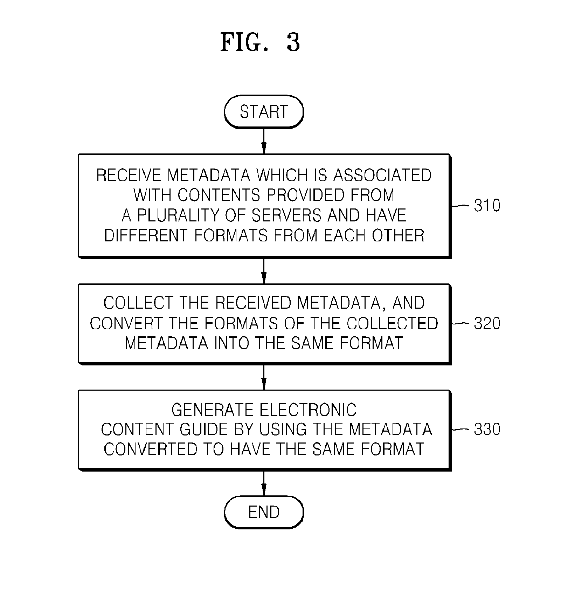

FIG. 3 is a flowchart illustrating a method of generating an electronic content guide, according to an embodiment of the present invention. In operation 310, metadata which is associated with content provided from a plurality of servers is received by the metadata acquisition unit 210 of FIG. 2. The received metadata may have different formats from each other. In operation 320, the received metadata is collected by the metadata management unit 220 of FIG. 2, and the formats of the collected metadata are converted into the same format by the metadata generation unit.

In operation 330, an electronic content guide is generated by the guide generation unit 230 of FIG. 2 by using the metadata converted to have the same format. After the electronic content guide is generated, an operation to output the generated electronic content guide on a screen may be performed.

According to the current embodiment of the present invention, metadata, which is associated with content provided from a plurality of servers and which has different formats, is received, the received metadata is collected, formats of the collected metadata are converted into the same format, and an electronic content guide is generated by using the metadata having the same format. Therefore, an electronic content guide to integrate and output information on the content received from a plurality of servers and having different formats can be generated.

Aspects of the present invention can be included as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), and storage media. Further, aspects of the present invention may be transmitted through wired or wireless networks. Further, aspects of the present invention may be implemented in a personal digital assistant, a cellular phone, a personal or laptop computer, a digital media player, a camera, a digital video recorder, etc.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of generating an electronic content guide, comprising:
receiving metadata associated with content provided from a plurality of servers (110-140), the metadata having different formats from each other;
collecting the received metadata and converting the different formats of the collected metadata into a same format; and
generating an electronic content guide by using the metadata converted to have the same format.

2. The method of claim 1,
wherein the receiving the metadata comprises receiving the metadata according to metadata acquisition information, and
wherein the metadata acquisition information comprises at least one of a keyword for the metadata acquisition and a category list for the metadata acquisition.

3. The method of claim 2, wherein the metadata acquisition information further comprises at least one of a Service Discovery & Selection server list, a list of sites supporting an open Application Program Interface, a Rich Site Summary site list, and a web site list.

4. The method of claim 2 or 3, wherein the metadata acquisition information is updated by receiving or fetching the metadata acquisition information from a database at predetermined intervals.

5. The method of any preceding claim, further comprising deleting overlapping metadata from the metadata converted to have the same format.

6. The method of any preceding claim, further comprising generating metadata for the content provided from the plurality of servers (110-140) when the content does not have metadata associated therewith.

7. An apparatus to generate an electronic content guide, comprising:
a metadata acquisition unit (210) arranged to receive metadata associated with content provided from a plurality of servers (110-140), the metadata having different formats from each other;
a metadata management unit (220) arranged to collect the received metadata and to convert formats of the collected metadata into a same format; and
a guide generation unit (230) arranged to generate an electronic content guide by using the metadata converted to have the same format.

8. The apparatus of claim 7, wherein the metadata acquisition unit (210) comprises at least one of an SD&S client (112), an open API client (122), an RSS reader (132), and a web browser (142).

9. The apparatus of claim 7 or 8, wherein:
the metadata acquisition unit (210) receives the metadata according to metadata acquisition information; and
the metadata acquisition information comprises at least one of a keyword for the metadata acquisition and a category list for the metadata acquisition.

10. The apparatus of claim 9, wherein the metadata acquisition information comprises at least one of an SD&S server list, a list of sites of supporting an open API, an RSS site list, and a web site list.

11. The apparatus of claim 9, further comprising a database to store the metadata acquisition information, wherein the metadata acquisition unit (210) receives the metadata acquisition information or fetches the metadata acquisition information from the database at predetermined intervals to update the metadata acquisition information.

12. The apparatus of any of claims 7 to 11, wherein the metadata management unit (220) deletes overlapping metadata from the metadata converted to have the same format.

13. The apparatus of any of claims 7 to 12, further comprising a metadata generation unit which determines whether content not having metadata associated therewith exists in the contents provided from the servers and selectively generates metadata for the content according to the result of the determination.

14. The apparatus of any of claims 7 to 13, further comprising a graphical user interface to display the generated electronic content guide.

15. A computer-readable medium having embodied thereon a computer program for performing the method of any of claims 1 to 6.
